# FASCICULE DE BREVET EUROPEEN

(11) **EP 3 649 091 B1**
(45) Date de publication et mention de la délivrance du brevet: **16.02.2022**
(21) Numéro de dépôt: 18773507.1
(22) Date de dépôt: 05.07.2018
(51) Int. Cl.: C03C 17/00, C03C 17/30

(54) **PROCEDE D'OBTENTION D'UN SUBSTRAT DE VERRE TEXTURE REVETU D'UN REVETEMENT DE TYPE SOL-GEL ANTIREFLET**
VERFAHREN ZUR HERSTELLUNG EINES MIT EINER ANTIREFLEKTIERENDEN SOL-GEL-BESCHICHTUNG BESCHICHTETEN TEXTURIERTEN GLASSUBSTRATS
METHOD FOR PRODUCING A TEXTURED GLASS SUBSTRATE COATED WITH AN ANTI-REFLECTIVE SOL-GEL-TYPE COATING

(30) Priorité: 07.07.2017 FR 1770729
(43) Date de publication de la demande: 13.05.2020
(73) Titulaire: SAINT-GOBAIN GLASS FRANCE, 92400 Courbevoie (FR)
(72) Inventeur: LEQUIPPE, Guillaume, 60200 Compiegne (FR); PARDAL, Xiaolin, 60200 Compiegne (FR); HALLER, Servane, 69003 Lyon (FR)
(74) Mandataire: Saint-Gobain Recherche
(86) Numéro de dépôt international: PCT/FR2018/051685
(87) Numéro de publication internationale: WO 2019/008282

(56) Documents cités:
- WO-A1-2011/018590
- US-A- 4 694 218

## Description

L'invention se rapporte au domaine des matériaux comprenant un substrat en verre revêtu d'au moins un revêtement antireflets. Elle concerne en particulier des matériaux utilisables en toiture de serres agricoles, horticoles ou urbaines.

Les matériaux en verre destinés à être employés comme vitres pour serre doivent répondre à certains impératifs en termes de propriétés optiques et de durabilité. Leur transmission lumineuse doit en particulier être la plus élevée possible, et il est connu pour ce faire d'employer des substrats de verre extra-clair et de revêtir ces substrats de couches antireflet à base de silice poreuse obtenues par des procédés de type sol-gel. De par leur faible indice de réfraction, idéalement proche de la racine carrée de l'indice de réfraction du substrat de verre et leur grande durabilité chimique, ces couches se sont révélées particulièrement appropriées. De telles couches sont notamment décrites dans la demande FR2908406. WO2011018590 concerne un article comprenant un substrat ayant une surface principale revêtue d'un revêtement antistatique mésoporeux, ledit revêtement possédant un indice de réfraction inférieur ou égal à 1,5, ainsi qu'une matrice à base de silice fonctionnalisée par des groupes ammonium qui présente un caractère hydrophobe. US4694218 qui s'intéresse à des couches capables de réfléchir la lumière de manière diffuse afin de réduire la réflexion spéculaire d'écrans.

Il s'avère que les rendements des cultures installées sous les serres sont également améliorés par l'emploi de substrats capables de diffuser la lumière. Un éclairage diffus et homogène optimise en effet la croissance des plantes. Pour ce faire, des substrats de verre présentant au moins une face texturée ont été développés. De tels substrats sont par exemple obtenus par laminage du verre, c'est-à-dire en faisant passer le verre chaud entre des rouleaux eux-mêmes texturés, qui viennent imprimer la surface du verre et créer un relief. Le terme « verre imprimé » est également employé dans la technique.

Il s'est toutefois avéré que le dépôt de couches sol-gel antireflets du type précédemment décrit par application d'une solution sur une surface texturée ne permettait pas d'obtenir des propriétés optiques parfaitement optimisées, en particulier pour les texturations les plus importantes. Les inventeurs ont pu mettre en évidence que même si la solution était déposée de manière homogène sur toute la surface du verre, la texturation de ce dernier induisait lors du séchage des forces capillaires favorisant un écoulement dans les vallées de la structure texturée, conduisant après séchage à une couche hétérogène en épaisseur, dans laquelle la couche est très peu épaisse, voire inexistante au niveau des pics de la structure. Il en résulte une hétérogénéité spatiale du facteur de réflexion lumineuse, et par conséquent un facteur de transmission lumineuse global plus faible que si la couche était parfaitement homogène.

L'invention, qui a pour but d'obvier à ces inconvénients, a pour objet un procédé d'obtention d'un matériau comprenant un substrat de verre texturé revêtu sur au moins une de ses faces texturées d'un revêtement de type sol-gel antireflet à base de silice poreuse, ledit procédé comprenant les étapes suivante :
- une étape d'application sur ladite au moins une face texturée dudit substrat d'une solution contenant au moins un précurseur de silice et au moins un agent porogène, puis
- une étape de traitement thermique visant à consolider ledit revêtement antireflet,
ledit procédé étant tel qu'avant ladite étape d'application le substrat de verre est soumis à une étape de préchauffage de manière à ce que ladite au moins une face texturée destinée à être revêtue par ledit revêtement antireflet ait une température comprise dans un domaine allant de 30 à 100°C immédiatement avant l'étape d'application.

Le substrat de verre se présente en général sous la forme de plaques, généralement rectangulaires, d'épaisseur comprise dans un domaine allant de 1 à 10 mm, notamment de 2 à 8 mm, voire de 3 à 6 mm. Les dimensions latérales des plaques vont typiquement de 0,5 à 3 m.

Le substrat de verre est de préférence constitué d'un verre de type silico-sodocalcique. D'autres types de verre sont toutefois utilisables, comme les verres borosilicates ou aluminosilicates. Le substrat de verre est de préférence un verre extra-clair, au sens où la teneur massique totale en oxyde de fer est comprise dans un domaine allant de 10 à 200 ppm, notamment de 20 à 150 ppm. Le facteur de transmission lumineuse au sens de la norme EN 410 du substrat de verre est avantageusement d'au moins 90%, voire 91%.

Par « face texturée », on entend que la face en question présente un relief, composé d'une succession de pics et de vallées. Ce relief peut être périodique ou aléatoire.

Au moins une face texturée du substrat destinée à être revêtue par le revêtement antireflet présente de préférence un profil tel que, au sens de la norme ISO 4287 :1997 :
- le paramètre Rz est compris dans un domaine allant de 18 à 200 µm, notamment de 20 à 150 µm, et en particulier de 50 à 120 µm, et
- le paramètre RSm est compris dans un domaine allant de 500 à 2500 µm, notamment de 600 à 2000 µm.

Ces valeurs sont obtenues en utilisant des filtres λs de 25 µm et λc de 8 mm.

La texturation est capable de créer un flou, et donc de diffuser la lumière. Le substrat de verre présente avantageusement un flou d'au moins 20%, notamment 40% et même 50% ou 70%, voire 80%. En règle générale, une valeur du paramètre Rz plus élevée est associée à un flou plus élevé. Le flou est mesuré selon la norme ISO 14782 : 1999.

Le substrat de verre peut posséder une seule face texturée, ou encore deux faces texturées.

Le substrat de verre texturé est de préférence obtenu par laminage du verre. Cette technique consiste, à la sortie du four de fusion, lors de la mise en forme du verre, à faire passer le verre chaud entre deux rouleaux, généralement métalliques, dont l'un au moins est texturé, c'est-à-dire présente un relief. Le verre chaud est alors imprimé par le rouleau texturé, le relief ainsi créé étant conservé lors du refroidissement du verre.

D'autres méthodes de texturation sont possibles, comme des attaques chimiques ou mécaniques : attaque à l'acide, notamment fluorhydrique, ou sablage, par projection sur la surface du verre de particules abrasives. Ces méthodes sont toutefois plus coûteuses et moins respectueuses de l'environnement.

Le revêtement est du type sol-gel, c'est-à-dire obtenu par un procédé sol-gel.

Un procédé sol-gel comprend typiquement :
- la formation d'un « sol », c'est-à-dire d'une solution contenant au moins un précurseur, ici de silice,
- l'application de cette solution sur la surface à revêtir,
- la consolidation ou densification du revêtement au moyen d'un traitement thermique.

La solution contient de préférence un extrait sec d'au plus 10%, notamment 5% en poids, et généralement d'au moins 1% en poids.

Le solvant de la solution est de préférence choisi parmi l'eau, les solvants organiques, et les mélanges d'eau et de solvant organique. Les solvants organiques sont de préférence choisis parmi les alcools (par exemple l'isopropanol, le propanol, l'éthanol...) et l'acétone. Le terme « solvant » est ici employé dans son sens générique, si bien que le solvant peut être constitué d'un mélange de solvants.

La solution est de préférence aqueuse, au sens où le solvant de la solution contient au moins 50% en poids d'eau, voire 60%, et même 70% ou 80% ou encore 90% ou 95%. Le solvant est même de préférence totalement aqueux, au sens où il est constitué d'eau. L'emploi de solutions aqueuses ou tout du moins majoritairement aqueuses présente en effet des avantages en termes d'environnement, d'hygiène industrielle, de coût, mais aussi de durabilité de la couche obtenue. Il s'avère en outre que les avantages liés à l'invention en termes d'homogénéité d'épaisseur sont d'autant plus importants que la quantité d'eau dans le solvant est élevée.

Le revêtement antireflet est à base de silice. La teneur en silice du revêtement est de préférence d'au moins 60% en poids, notamment 70% et même 80% ou 90% en poids. Le revêtement est avantageusement constitué de silice.

Le précurseur de silice est de préférence un composé choisi parmi les alcoxydes et les halogénures de silicium, par exemple l'orthosilicate de tétraéthyle (TEOS). Le précurseur de silice peut également être un produit de réactions chimiques se produisant entre ces composés et d'autres constituants de la solution, par exemple l'eau lorsque le solvant en contient. Ces composés sont en effet susceptibles de s'hydrolyser au moins partiellement lors de la formation de la solution, donc avant l'application.

L'agent porogène est de préférence solide, le choix de sa taille permettant de faire varier la taille des pores. L'agent porogène est de préférence particulaire, notamment de forme sensiblement sphérique, par exemple sous forme de billes, creuses ou pleines. L'agent porogène est de préférence de nature organique. A titre d'exemple, l'agent porogène comprend des billes polymériques, en particulier d'un polymère choisi parmi le polyméthacrylate de méthyle (PMMA), les copolymères méthyl(méth)acrylate/acide (méth)acrylique, les polycarbonates, les polyesters, le polystyrène.

La solution à appliquer est de préférence acide. Son pH est de préférence compris entre 0 et5, notamment entre 1 et 3.

Outre le précurseur de silice et l'agent porogène, la solution peut comprendre d'autres composants, tels que des agents régulateurs de pH, des tensioactifs...

L'application de la solution est de préférence réalisée par enduction au moyen d'au moins un rouleau, technique également appelée « roll coating », et qui permet de contrôler précisément la quantité de solution déposée ainsi que l'homogénéité spatiale du dépôt. Selon cette technique, on fait de préférence défiler le substrat de verre sous un rouleau doseur et un rouleau applicateur en quasi contact l'un avec l'autre et en rotation dans le même sens ou dans le sens opposé, le rouleau applicateur étant en contact avec la face du substrat à revêtir, et la solution à appliquer étant versée par le dessus entre ces deux rouleaux. La solution, passant entre le rouleau doseur et le rouleau applicateur, vient se déposer à la surface de ce dernier, puis est transférée à la face à revêtir.

D'autres techniques d'application connues sont également utilisables, par exemple des techniques de pulvérisation, de trempage, au rideau etc...

Immédiatement après l'étape d'application, avant l'étape de traitement thermique, le procédé selon l'invention comprend de préférence une étape de séchage. Cette étape est destinée à accélérer l'évaporation du solvant contenu dans le revêtement. Elle peut être mise en œuvre par tous moyens connus, par exemple par soufflage d'air chaud. La température de l'air est alors de préférence comprise entre 50 et 160°C, et le temps de séchage de préférence compris entre 5 et 60 secondes.

L'étape de traitement thermique permet de consolider le revêtement antireflet. Lors de cette étape, les agents porogènes sont également éliminés, créant une porosité au sein du revêtement, permettant ainsi d'abaisser son indice de réfraction.

Le traitement thermique implique de préférence de porter le revêtement à une température d'au moins 400°C, notamment 500°C.

Le traitement thermique est de préférence un traitement de trempe du verre. La trempe du verre consiste à réchauffer le verre à une température généralement supérieure à 600°C puis à le refroidir rapidement, généralement au moyen de buses émettant de l'air froid. Ce refroidissement rapide permet de créer des contraintes de compression en surface du substrat de verre, et donc de renforcer sa résistance mécanique et aux impacts.

Le revêtement antireflet comprend de préférence des pores fermés ayant une plus petite dimension caractéristique qui est avantageusement, en moyenne, d'au moins 20 nm, notamment 40 nm, voire 50 nm et d'au plus 1 µm, notamment 500 nm, voire 100 nm. La répartition des pores est de préférence sensiblement homogène dans l'épaisseur. La proportion volumique des pores dans le revêtement est de préférence comprise entre 10 et 90%, notamment entre 20 et 80%, voire entre 30 et 70%.

Le revêtement antireflet présente de préférence une épaisseur moyenne comprise dans un domaine allant de 10 nm à 10 µm, notamment de 20 nm à 1 µm, voire de 30 à 300 nm ou de 50 à 200 nm.

Le revêtement antireflet présente avantageusement un indice de réfraction pour une longueur d'onde de 600 nm d'au plus 1,40, notamment 1,30.

Le revêtement antireflet peut être le seul revêtement porté par le substrat de verre, Alternativement, d'autres revêtements peuvent être présents sur la même face ou sur une autre face du substrat. En particulier, il est avantageux d'interposer entre le substrat de verre et le revêtement antireflet une sous-couche contenant du silicium, de l'oxygène, et optionnellement de l'azote et/ou du carbone, telle qu'une couche de silice, d'oxycarbure ou d'oxynitrure de silicium. Une telle sous-couche est en particulier utile lorsque le verre contient des ions alcalins car elle est apte à former une barrière auxdits ions. Une sous-couche de silice non poreuse, ayant un indice de réfraction entre 1,35 et 1,45 s'est également révélée utile pour augmenter la transmission lumineuse du matériau. De telles sous-couches présentent de préférence une épaisseur comprise dans un domaine allant de 10 à 200 nm, notamment de 80 à 120 nm. Elles peuvent être déposées par tout type de procédé, par exemple de type sol-gel, dépôt chimique en phase vapeur (CVD), pulvérisation cathodique etc...

Sans que la raison soit connue, il s'est avéré que l'étape de préchauffage permettait d'homogénéiser l'épaisseur du revêtement antireflet. Il en résulte un gain en termes de transmission lumineuse hémisphérique du matériau.

L'étape de préchauffage est réalisée de manière à ce que la au moins une face texturée destinée à être revêtue par ledit revêtement antireflet ait une température comprise dans un domaine allant de 30 à 100°C, notamment 50 à 80°C immédiatement avant l'étape d'application. Par « immédiatement », on entend de préférence que la face texturée à revêtir présente une température comprise dans la gamme précitée au plus 5 secondes, notamment 3 secondes, voire 1 seconde avant le début de l'application de la solution.

La température de la face à revêtir peut être mesurée par tout moyen connu, par exemple au moyen d'un pyromètre.

L'étape de préchauffage est de préférence réalisée par rayonnement, par exemple au moyen de lampes infrarouge ou de rayonnement microondes ou encore par convection, par exemple par soufflage d'air chaud.

Le procédé selon l'invention est généralement continu, et met en particulier en œuvre le défilement du substrat de verre successivement dans un dispositif de préchauffage, par exemple une étuve, puis dans un dispositif d'application de la solution, par exemple au moyen d'au moins un rouleau, puis dans une dispositif de traitement thermique, par exemple un four de trempe. Le dispositif de préchauffage est situé de préférence immédiatement en amont du dispositif d'application, de manière à pouvoir contrôler au mieux la température de la face à revêtir avant le début de l'application. Un dispositif de séchage est avantageusement interposé entre le dispositif d'application et le dispositif de traitement thermique. De manière préférée, le dispositif de séchage emploie de l'air préchauffé au niveau du dispositif de traitement thermique.

Le matériau obtenu selon l'invention se caractérise en particulier par le fait que le revêtement antireflet est particulièrement homogène en épaisseur.

Un objet de l'invention est donc aussi un matériau, notamment susceptible d'être obtenu par le procédé selon l'invention, qui comprend un substrat de verre texturé revêtu sur au moins une de ses faces texturées d'un revêtement de type sol-gel antireflet à base de silice poreuse. Ladite face texturée présente un relief composé d'une succession de pics et de vallées, et l'épaisseur locale du revêtement antireflet au niveau des pics est d'au moins 60 nm, notamment 80 nm et même 100 nm, et l'épaisseur locale du revêtement antireflet au niveau des vallées est d'au plus 700 nm, notamment 600 nm et même 500 nm.

De préférence, la valeur de l'épaisseur locale du revêtement antireflet au niveau desdits pics est d'au moins 40%, notamment 50 ou 60% de la valeur de l'épaisseur locale du revêtement antireflet au niveau desdites vallées. Une observation par microscopie, notamment à l'aide d'un microscope électronique à balayage, en particulier réalisée sur la tranche du matériau, permet de mesurer ces épaisseurs locales.

Comme indiqué précédemment, le substrat de verre peut posséder une seule face texturée ou deux faces texturées. Au moins une face texturée est revêtue par le revêtement antireflet de type sol-gel. L'autre face du substrat, qu'elle soit texturée ou non, peut être ou non revêtue par un revêtement antireflet, de type sol-gel ou non. Toutes les combinaisons de caractéristiques sont ici possibles.

Le matériau présente de préférence un facteur de transmission lumineuse, au sens de la norme EN410 d'au moins 92%, notamment 93% et même 94%. Lorsque les deux faces du substrat sont revêtues par un revêtement antireflet, le facteur de transmission lumineuse peut même être d'au moins 96%, notamment 97% ou 98%.

Le revêtement antireflet permet, lorsqu'il est déposé sur une face du substrat, d'augmenter le facteur de transmission lumineuse d'au moins 1%, notamment 2% et même 3%. Il s'agit ici d'une augmentation absolue et non relative.

Les caractéristiques relatives notamment au substrat et au revêtement antireflet présentées ci-avant lors de la description du procédé selon l'invention s'appliquent également au matériau selon l'invention.

Un autre objet de l'invention est une serre, notamment agricole, horticole ou urbaine, comprenant au moins un matériau selon l'invention. Le matériau est de préférence intégré à la toiture de la serre. La face texturée du matériau qui est revêtue par le revêtement antireflet peut être tournée du côté intérieur ou extérieur de la serre.

D'autres applications du matériau selon l'invention sont également possibles. Le matériau selon l'invention peut par exemple être employé comme face avant d'une cellule photovoltaïque.

Les exemples qui suivent illustrent l'invention de manière non limitative.

Deux substrats de verre possédant une face texturée ont été revêtus par un revêtement antireflet sol-gel de la manière décrite dans la demande FR 2 908 406, en utilisant une solution totalement aqueuse contenant du TEOS comme précurseur de silice et un agent porogène sous forme de billes polymériques.

Les deux substrats, appelés substrat A et substrat B, présentent à l'état non revêtu les caractéristiques en termes d'état de surface et de propriétés optiques données dans le tableau 1 ci-après. Les paramètres de rugosité Rz et RSm sont définis selon la norme ISO 4287 :1997, le flou selon la norme ISO 14782 :1999 et le facteur de transmission lumineuse (TL) selon la norme EN 410.

**Tableau 1**

| Substrat | Rz (µm) | RSm (µm) | Flou (%) | TL (%) |
|---|---|---|---|---|
| A | 72 | 1530 | 50 | 91 |
| B | 100 | 1800 | 55 | 91 |

Dans un exemple comparatif, les substrats de verre n'ont pas subi de préchauffage avant application de la solution. Dans un exemple selon l'invention, les substrats de verre ont été préchauffés à l'aide de lampes infrarouge, de manière à ce que la température du substrat soit de 70°C immédiatement avant application de la solution. Cette température a été mesurée à l'aide d'un pyromètre.

Le tableau 2 ci-après présente pour chacun des exemples le gain de transmission lumineuse obtenu. Ce gain absolu, noté ΔTL, est exprimé en %.

**Tableau 2**

| | A | B |
|---|---|---|
| ΔTL (%) - comparatif | 1,3 | 0,9 |
| ΔTL (%) - invention | 1,8 | 1,4 |

On voit donc que l'étape de préchauffage a permis d'améliorer l'efficacité antireflet du revêtement, de sorte que le matériau présente une transmission lumineuse plus élevée. Le gain lié à l'étape de préchauffage est de l'ordre de 0,5% en absolu.

## Revendications

1. Procédé d'obtention d'un matériau comprenant un substrat de verre texturé revêtu sur au moins une de ses faces texturées d'un revêtement de type sol-gel antireflet à base de silice poreuse, ledit procédé comprenant les étapes suivantes :
- une étape d'application sur ladite au moins une face texturée dudit substrat d'une solution contenant au moins un précurseur de silice et au moins un agent porogène, puis
- une étape de traitement thermique visant à consolider ledit revêtement antireflet,
ledit procédé étant tel qu'avant ladite étape d'application le substrat de verre est soumis à une étape de préchauffage de manière à ce que ladite au moins une face texturée destinée à être revêtue par ledit revêtement antireflet ait une température comprise dans un domaine allant de 30 à 100°C, notamment de 50 à 80°C, immédiatement avant l'étape d'application.

2. Procédé selon la revendication 1, tel que la solution est aqueuse.

3. Procédé selon l'une des revendications précédents, tel qu'au moins une face texturée du substrat de verre destinée à être revêtue par le revêtement antireflet présente un profil tel que, au sens de la norme ISO 4287 :1997 :
- Le paramètre Rz est compris dans un domaine allant de 18 à 200 µm, notamment de 20 à 150 µm, et en particulier de 50 à 120 µm, et
- Le paramètre RSm est compris dans un domaine allant de 500 à 2500 µm, notamment de 600 à 2000 µm.

4. Procédé selon l'une des revendications précédentes, tel que le substrat de verre présente un flou d'au moins 20%, notamment 40% et même 50%.

5. Procédé selon l'une des revendications précédentes, tel que le facteur de transmission lumineuse au sens de la norme EN 410 du substrat de verre est d'au moins 90%, voire 91%.

6. Procédé selon l'une des revendications précédentes, tel que l'application de la solution est réalisée par enduction au moyen d'au moins un rouleau.

7. Procédé selon l'une des revendications précédentes, tel que le précurseur de silice est un composé choisi parmi les alcoxydes et les halogénures de silicium.

8. Procédé selon l'une des revendications précédentes, tel qu'au moins un agent porogène est de nature organique, notamment comprend des billes polymériques, en particulier d'un polymère choisi parmi le polyméthacrylate de méthyle, les copolymères méthyl(méth)acrylate/acide(méth)acrylique, les polycarbonates, les polyesters, le polystyrène.

9. Procédé selon l'une des revendications précédentes, tel que l'étape de préchauffage est réalisée par rayonnement, notamment au moyen de lampes infrarouge, ou par convection, notamment par soufflage d'air chaud.

10. Procédé selon l'une des revendications précédentes, tel que le traitement thermique est un traitement de trempe du verre.

11. Procédé selon l'une des revendications précédentes, qui comprend, immédiatement après l'étape d'application et avant l'étape de traitement thermique, une étape de séchage.

12. Procédé selon l'une des revendications précédentes, tel que le revêtement antireflet présente une épaisseur moyenne comprise dans un domaine allant de 10 nm à 10 µm, notamment de 20 nm à 1 µm.

13. Matériau, notamment susceptible d'être obtenu selon le procédé de l'une quelconque des revendications 1 à 12, comprenant un substrat de verre texturé revêtu sur au moins une de ses faces texturées d'un revêtement de type sol-gel antireflet à base de silice poreuse, ladite face texturée présentant un relief composé d'une succession de pics et de vallées, ledit matériau étant tel que l'épaisseur locale du revêtement antireflet au niveau des pics est d'au moins 60 nm, notamment 80 nm et même 100 nm, et l'épaisseur locale du revêtement antireflet au niveau des vallées est d'au plus 700 nm, notamment 600 nm et même 500 nm.

14. Serre comprenant au moins un matériau selon la revendication précédente.

## Patentansprüche

1. Verfahren zur Herstellung eines Materials, umfassend ein texturiertes Glassubstrat, das auf mindestens einer seiner texturierten Seiten mit einer Beschichtung vom Sol-Gel-Antireflextyp auf Basis von porösem Siliciumdioxid beschichtet ist, wobei das Verfahren die folgenden Schritte umfasst:
- einen Schritt des Aufbringens, auf die mindestens eine texturierte Seite des Substrats, einer Lösung, die mindestens einen Siliciumdioxidvorläufer und mindestens ein porenbildendes Mittel enthält, dann
- einen Schritt der Wärmebehandlung, der darauf abzielt, die Antireflexbeschichtung zu verfestigen,
wobei das Verfahren so ist, dass vor dem Schritt des Aufbringens das Glassubstrat einem Schritt des Vorwärmens unterzogen wird, sodass die mindestens eine texturierte Seite, die dazu bestimmt ist, mit der Antireflexbeschichtung beschichtet zu werden, unmittelbar vor dem Schritt des Aufbringens eine Temperatur in einem Bereich, der von 30 bis 100 °C, insbesondere von 50 bis 80 °C reicht, aufweist.

2. Verfahren nach Anspruch 1, wobei die Lösung wässrig ist.

3. Verfahren nach einem der vorstehenden Ansprüche, wobei mindestens eine texturierte Seite des Glassubstrats, das dazu bestimmt ist, mit der Antireflexbeschichtung beschichtet zu werden, ein Profil aufweist, wobei im Sinne der Norm ISO 4287:1997:
- der Parameter Rz in einem Bereich, der von 18 bis 200 µm, insbesondere von 20 bis 150 µm und besonders von 50 bis 120 µm reicht, umfasst ist, und
- der Parameter RSm in einem Bereich, der von 500 bis 2500 µm, insbesondere von 600 bis 2000 µm, reicht, umfasst ist.

4. Verfahren nach einem der vorstehenden Ansprüche, wobei das Glassubstrat eine Unschärfe von mindestens 20 %, insbesondere 40 % und sogar 50 % aufweist.

5. Verfahren nach einem der vorstehenden Ansprüche, wobei der Lichtdurchlässigkeitsfaktor im Sinne der Norm EN 410 des Glassubstrats mindestens 90 % oder sogar 91 % beträgt.

6. Verfahren nach einem der vorstehenden Ansprüche, wobei das Aufbringen der Lösung durch Überziehen mittels mindestens einer Walze durchgeführt wird.

7. Verfahren nach einem der vorstehenden Ansprüche, wobei der Siliciumdioxidvorläufer eine Verbindung ist, ausgewählt aus Siliciumalkoxiden und -halogeniden.

8. Verfahren nach einem der vorstehenden Ansprüche, wobei mindestens ein porenbildendes Mittel organischer Natur ist, insbesondere polymere Kügelchen umfasst, besonders aus einem Polymer, ausgewählt aus Polymethylmethacrylat, Methyl(meth)acrylat/(Meth)acrylsäure-Copolymeren, Polycarbonaten, Polyestern, Polystyrol.

9. Verfahren nach einem der vorstehenden Ansprüche, wobei der Schritt des Vorwärmens durch Bestrahlen, insbesondere mittels Infrarotlampen, oder durch Konvektion, insbesondere durch Einblasen von Heißluft, durchgeführt wird.

10. Verfahren nach einem der vorstehenden Ansprüche, wobei die Wärmebehandlung eine Abschreckbehandlung des Glases ist.

11. Verfahren nach einem der vorstehenden Ansprüche, das unmittelbar nach dem Schritt des Aufbringens und vor dem Schritt der Wärmebehandlung einen Schritt des Trocknens umfasst.

12. Verfahren nach einem der vorstehenden Ansprüche, wobei die Antireflexbeschichtung eine mittlere Dicke in einem Bereich, der von 10 nm bis 10 µm, insbesondere von 20 nm bis 1 µm reicht, aufweist.

13. Material, das insbesondere nach dem Verfahren eines der Ansprüche 1 bis 12 hergestellt werden kann, umfassend ein texturiertes Glassubstrat, das auf mindestens einer seiner texturierten Seiten mit einer Beschichtung vom Sol-Gel-Antireflextyp auf Basis von porösem Siliciumdioxid beschichtet ist, wobei die texturierte Seite ein Relief aufweist, das aus einer Abfolge von Höhen und Tiefen besteht, wobei das Material so ist, dass die lokale Dicke der Antireflexbeschichtung auf dem Niveau der Höhen mindestens 60 nm, insbesondere 80 nm und sogar 100 nm beträgt und die lokale Dicke der Antireflexbeschichtung auf dem Niveau der Tiefen höchstens 700 nm, insbesondere 600 nm und sogar 500 nm beträgt.

14. Gewächshaus, das mindestens ein Material nach dem vorstehenden Anspruch umfasst.

## Claims

1. A method for obtaining a material comprising a textured glass substrate coated on at least one of its textured faces with an anti-reflective coating of sol-gel type based on porous silica, said method comprising the following steps:
- a step of applying to said at least one textured face of said substrate a solution containing at least one silica precursor and at least one pore-forming agent, then
- a heat-treatment step aimed at consolidating said anti-reflective coating,
said method being such that, before said application step, the glass substrate is subjected to a preheating step, so that said at least one textured face intended to be coated with said anti-reflective coating has a temperature within a range extending from 30°C to 100°C, in particular from 50°C to 80°C, immediately before the application step.

2. The method according to claim 1, such that the solution is aqueous.

3. The method according to one of the preceding claims, such that at least one textured face of the glass substrate intended to be coated with the anti-reflective coating exhibits a profile such that, within the meaning of standard ISO 4287:1997:
- The parameter Rz is within a range extending from 18 to 200 µm, in particular from 20 to 150 µm and especially from 50 to 120 µm, and
- The parameter RSm is within a range extending from 500 to 2500 µm, in particular from 600 to 2000 µm.

4. The method according to one of the preceding claims, such that the glass substrate exhibits a haze of at least 20%, in particular 40% and even 50%.

5. The method according to one of the preceding claims, such that the light transmission factor within the meaning of standard EN 410 of the glass substrate is at least 90%, indeed even 91%.

6. The method according to one of the preceding claims, such that the solution is applied by covering by means of at least one roller.

7. The method according to one of the preceding claims, such that the silica precursor is a compound chosen from the silicon alkoxides and halides.

8. The method according to one of the preceding claims, such that at least one pore-forming agent is of organic nature, in particular it comprises polymeric beads, especially of a polymer chosen from polymethyl methacrylate, methyl (meth)acrylate/(meth)acrylic acid copolymers, polycarbonates, polyesters, polystyrene.

9. The method according to one of the preceding claims, such that the preheating step is carried out by radiation, in particular by means of infrared lamps, or by convection, in particular by blowing hot air.

10. The method according to one of the preceding claims, such that the heat treatment is a glass-tempering treatment.

11. The method according to one of the preceding claims, which comprises, immediately after the application step and before the heat treatment step, a drying step.

12. The method according to one of the preceding claims, such that the anti-reflective coating exhibits a mean thickness within a range extending from 10 nm to 10 µm, in particular from 20 nm to 1 µm.

13. A material, capable in particular of being obtained according to the method of any one of claims 1 to 12, comprising a textured glass substrate coated on at least one of its textured faces with an anti-reflective coating of the sol-gel type based on porous silica, said textured face exhibiting a relief composed of a succession of peaks and troughs, said material being such that the local thickness of the anti-reflective coating at the peaks is at least 60 nm, in particular 80 nm and even 100 nm, and the local thickness of the anti-reflective coating at the troughs is at most 700 nm, in particular 600 nm and even 500 nm.

14. A greenhouse comprising at least one material according to the preceding claim.
